# EUROPEAN PATENT SPECIFICATION

(11) **EP 0 963 833 B1**
(45) Date of publication and mention of the grant of the patent: **14.08.2002**
(21) Application number: 98830360.8
(22) Date of filing: 11.06.1998
(51) Int. Cl.: B29C 57/04, B29C 61/00

(54) **Tool with multiple operative phases, to form stable bell mouths in terminal junction sections of pipes made of thermoplastic material**
Werkzeug mit mehreren Betriebsstufen zum Formen von stabilen Muffen an Enden von thermoplastischen Kunststoffrohren
Outil ayant plusieurs fonctions pour la formation de tulipes dimensionnellement stables aux extrémités de tubes thermoplastiques

(43) Date of publication of application: 15.12.1999
(73) Proprietor: SICA S.p.A., 48011 Alfonsine (IT)
(72) Inventor: Savioli, Leopoldo, 48011 Alfonsine RA (IT)
(74) Representative: Lanzoni, Luciano

(56) References cited:
- EP-A- 0 530 387
- FR-A- 2 022 958
- FR-A- 2 184 857
- FR-A- 2 375 973
- US-A- 3 677 684

## Description

The present invention relates to a tool with multiple operative phases, to form stable bell mouths on the terminal junction section of pipes made of thermoplastic material, of the type operating inside the terminal junction section previously heated to the plastic state, according to the precharacterising part of claim 1.

In this technological sector there are difficulties to be overcome, linked to the necessary precision that the bell mouths must have at least internally, in order to obtain an effective junction between multiple lengths of pipe, as well as to the problem of the shrinkage of the thermoplastic material, after the definitive formation of the bell mouth.

It is well known that the molecules of the thermoplastic materials that are subjected to a dimensional change, "remember" the previous physical state and tend to return to the original state. Hence, when the bell mouths, which increase the diameter of the pipe, extruded when hot, are formed, the pipe would tend to return to the previous state, i.e. with a smaller diameter than the one formed with the bell mouth. Moreover, the aforesaid shrinkage varies according to the thermoplastic material in use (PVC, polyethylene, polypropylene, polyolefins in general).

To solve the problem of the precision of the internal dimensions of the bell mouth, techniques have for instance been adopted to shape the bell mouth with mechanical mandrels shaped according to the bell mouth to be obtained and able to be forcibly introduced inside the terminal section of tube to be formed as a bell mouth, previously heated to the plastic deformation temperature. In case of bell mouths comprising ring-shaped inner gaskets, for better sealing, radially expandable and subsequently retractable mechanical sectors have been provided, to allow to form, upon heating, the seat for the gasket in the bell mouth.

In regard to the aforesaid technique, reference is made to patent EP N.052.581, of 14 October 1981, in the name of the same Applicant, wherein the wedge shaped activating means (with inclined plane to fasten each mechanical sector) are described, along with the conformation of the mechanical sectors themselves, shaped in such a way as to constitute, when expanded, a homogeneous surface to stop and shape, from within, the ring seat for the bell mouth gasket.

Techniques have also been studied whereby pressure is imparted from the outside inwards, on the pre-heated terminal section of the pipe, with the countering action of an internal mandrel, but such techniques are not applicable to the case at hand, which aims to obtain a precise bell mouth without material shrinkage, even for corrugated pipes or presenting outer lugs or shapes, which obviously cannot be heat treated by external pressure of fluid or mechanical means

To solve instead the problem of thermoplastic material shrinkage, as far back as 1983 the Applicant perfected an apparatus comprising a shaping chamber defined internally by a mandrel that presents the nominal shape and dimensions of the bell mouth to be obtained, and externally by dies whereon the terminal section of pipe to be treated is preliminarily made to adhere by means of pressurised air coming from inside the mandrel.

The terminal section is thus expanded beyond its required nominal size, maintaining it for a certain time in contact against the aforesaid outer dies, then allowing the bell mouth thus formed to shrink spontaneously and to calibrate itself with precision on the underlying mandrel, whereon are provided exhaust conduits for the pressurised air.

It has been observed that in such cases the shrinkage of the thermoplastic material was absent or markedly reduced after the complete formation of the bell mouth and an adequate precision was obtained, an inner calibration of the bell mouth itself being always present

Unfortunately, this technique too cannot be applied to pipes made of thermoplastic material that are corrugated or in any case externally provided with lugs and/or shapes.

Document US-A-3677684, discloses an expanding mandrel, which is adjustable from a fully contracted position, wherein it fits freely within the terminal section of a pipe, to a fully expanded position, which dilates the terminal section which encompasses it, to form a bell mouth having an inner diameter which is equal to its final, nominal one. This prior art is considered the base for the preamble of claim 1.

In document FR-A-2184857, a plastic pipe is positioned inside a closed mould, so shaped to form a bell mouth at one end thereof. A hot fluid is used to heat the pipe to a plastic deformation temperature and then pressurized to expand the pipe against the inner walls of the mould, so as to form a bell mouth having a diameter greater than the required nominal one. The pipe, while maintained against the walls of the mould to avoid any uncontrolled, spontaneous shrinkage, is cooled using the same pressurized fluid to obtain a rigid product. The pressure is then released and the pipe (now rigid and, therefore, stable) is extracted and brought to a separate, distant part of the apparatus, where the bell mouth portion is freely inserted on a calibration mandrel (having the exact nominal shape of the bell mouth to be formed), heated again (by any suitable heating means belonging to this part of the apparatus), allowed to shrink spontaneously onto the calibration mandrel to get its final, nominal shape and then cooled again.

In document FR-A-2 022 958, a mandrel, for forming a bell mouth at one end of a pipe, has a fixed diameter and is rotated around its longitudinal axis during the forced insertion in a pipe having circular or helicoidal external shapes, to reduce stresses and to limit the risk of making the pipe bend around or collapse along its axis during belling.

It is the object of the present invention to provide an improved tool for efficiently and quickly obtaining precise and stable bell-mouths on the terminal junction sections of pipes made of thermoplastic material, even for corrugated pipes or for pipes presenting outer lugs or shapes.

This object is achieved according to the invention by the tool as defined in claim 1.

Particular embodiments of the invention are the subject of the dependent claims.

The invention presents the advantage of being applicable to any type of thermoplastic pipe on the market, including corrugated ones and/or those with external shaping, obtaining precise and stable bell mouths.

Additionally, its construction is simple, as it preferably comprises a composite mandrel, set on a single axis coaxial to that of the pipe to be treated, operating with mechanical means and able easily to be adapted to any thermoplastic material used, since all that is required is to replace, depending on the cases, a single piece of the composite mandrel.

Not the least advantage is also to provide for a remarkable speed of execution.

Additional characteristics and advantages shall become more readily apparent from the detailed description that follows, made with reference to the enclosed drawings, which represent an embodiment provided purely by way of non limiting example, wherein:
- Figure 1 shows a preferred embodiment of the subject tool, comprising a composite mandrel, in a side view and in a first operative phase, with some parts shown in schematic form and others removed, the better to highlight other parts;
- Figure 2 shows the mandrel in Figure 1, in a second operative phase;
- Figure 3 shows the mandrel in Figures 1 and 2, in a third operative phase;
- Figure 4 shows the mandrel in the previous figures, during the final operative phase.

With reference to the aforesaid figures, the subject tool preferably comprises a composite mandrel 1 with multiple operative phases. It essentially comprises, proceeding from the front end 10 to the rear end 19, a first portion 11 and a second portion 12.

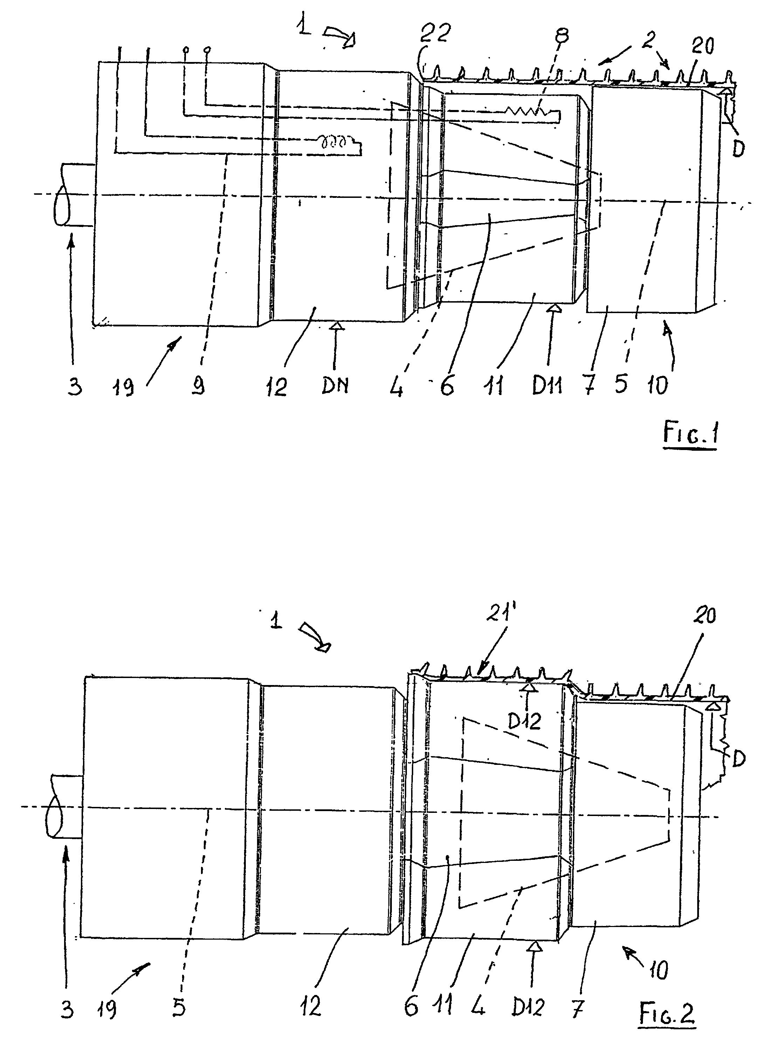

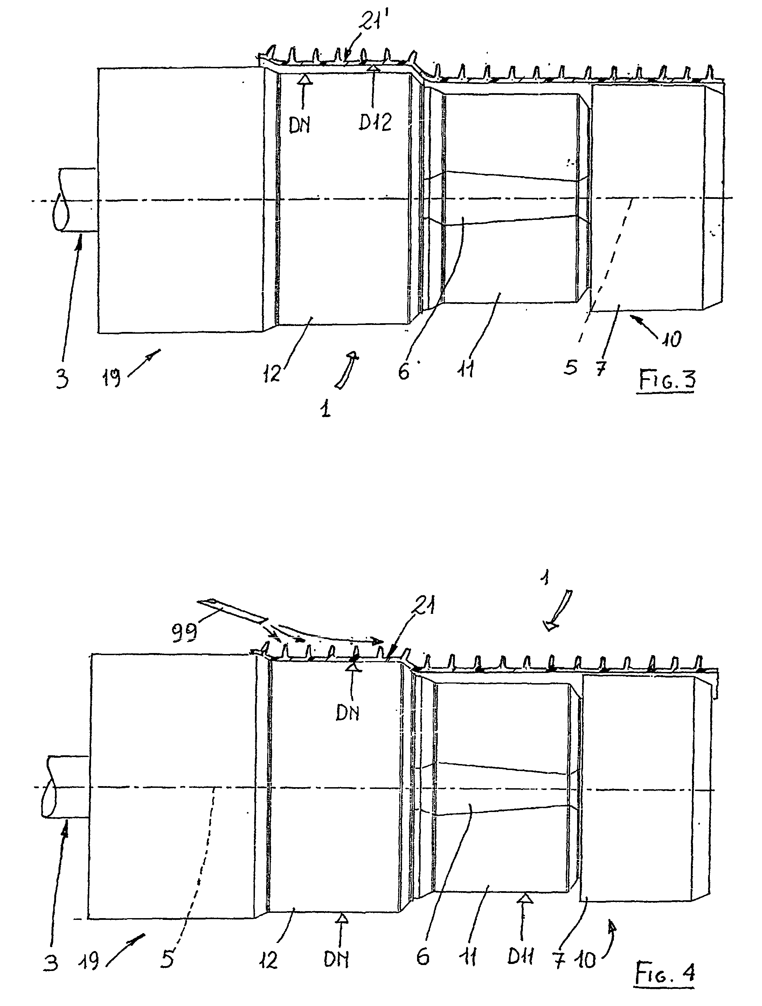

The first portion 11 is movable from a first retracted extreme position (see Figures 1, 3 and 4), wherein it presents a diameter D11 smaller than the inner diameter D of the pipe 20, thereby being able to be introduced freely and preliminarily inside the terminal section 2 of the pipe 20, which represents the first operative phase, to a second expanded extreme position (see Figure 2) which dilates the part of the terminal section 2 that surrounds it and which represents the second operative phase. Thus a bell mouth 21' is formed, whose provisional inner diameter D12, which corresponds to the outer diameter of the first portion 11 in position of extreme expansion, is greater than the final inner nominal diameter DN of the definitive bell mouth 21. The first portion 11 then returns to the first retracted extreme position (see Figure 3). The second portion 12, which instead is geometrically fixed and placed consecutively to the first 11, presents an outer diameter equal to the nominal and final inner diameter DN of the definitive bell mouth 21.

The second portion can be introduced inside the pre-formed bell mouth 21' (see Figure 3), after the complete intervention thereon by the first portion 11 which, in retracted position, allows the free subsequent introduction of the second portion 12 inside the pre-formed bell mouth 21' (this is the third operating phase).

This second portion 12, having a diameter rigorously equal to the nominal one required, guarantees and has the function of exactly calibrating the inner diameter of the bell mouth 21, preliminarily widened to the provisional one 21' and which is subjected to spontaneous retraction, after the previous dilation, as a result of the natural characteristics of such materials (this represents the fourth and final phase, see Figure 4). Stability is thereby guaranteed to the bell mouth 21, even if provided with lugs or external shaping.

Note that, in the aforesaid first operative phase, the second portion 12 acts as a stop on the front end 22 of the first portion 11 inside the terminal section.

In order to co-ordinate the various movements synchronously according to the various phases and with minimum time expenditure, means 3 to provide relative motion between mandrel 1 and pipe 20, operating along the longitudinal axis 5 of the mandrel 1, are provided as well as means 4 driving the expansion and retraction of the first portion 11.

In particular, the first portion 11 is of the type with radially movable mechanical sectors 6, whose length, measured along the longitudinal axis 5 of the mandrel 1, is equal to the length of the bell mouth 21,21'. In this case, as in the known case of Patent EP. n. 052.581, the driving means 4 are represented by a wedge with inclined planes, shown schematically because it is already known. For the proper operation of the means 4 the first portion 11 is to be interposed between the second portion 12 and an end head 7, also presenting a smaller diameter than the inner diameter D of the tube 20, so that the mechanical sectors 6 are bilaterally guided along perpendicular planes to the longitudinal axis 5 of the mandrel 1.

It is important to stress that the first portion 11 is heated to a temperature greater than or equal to the one of the terminal section 2, so that the latter does not give off heat during its plastic dilation to form the pre-formed bell mouth 21'. The second portion 12 instead is cooled below the temperature of the terminal section 2, in order to bring the definitive bell mouth 21 to ambient temperature quickly, once it has spontaneously retracted from the diameter D12 to the definitive nominal diameter DN. In particular, the first portion 11 is heated by heating means 8 introduced therein, whereas the second portion 12 is cooled by cooling means 9, 99 both inside and outside the portion itself. Whilst the internal cooling means provide cooling in essentially continuous fashion, because they are effective only when in contact with the portion 2 of the bell mouth that has undergone its spontaneous shrinkage, the external cooling means 99 operate on the definitive bell mouth 21 preferably immediately after it has spontaneously retracted onto the second portion 12 that calibrates it internally, to quicken the spontaneous retraction of the bell mouth. It should lastly be observed that, advantageously, the diameter DN of the second portion 12 is computed according to the type of thermoplastic material used for the pipes 20 to be treated.

Thus the second portion 12 is removably interchangeable. The invention thus conceived can be subject to numerous modifications and variations, without thereby departing from the scope of the inventive concept expressed below.

## Claims

1. Tool with multiple operative phases, to form stable bell mouths on the terminal junction section of pipes made of thermoplastic material, of the type operating inside the terminal junction section (2) previously heated to the plastic state and comprising a first portion (11), movable from a first retracted extreme position wherein it presents a diameter (D11) smaller than the inner diameter (D) of the pipe (20), thereby being able to be introduced freely and preliminarily into the terminal section (2) of the pipe (20), to a second expanded extreme position which dilates the entire part of the terminal section (2) which encompasses it, thereby preforming a bell mouth (21'), **characterized in that:**
- the inner provisional diameter (D12) of the bell mouth (21'), corresponding to the outer diameter of the first portion (11) in position of extreme expansion, is greater than the final inner nominal diameter (DN) of the definitive bell mouth (21), said first portion (11) then returning to the first retracted extreme position;
- the tool further comprises a second portion (12), geometrically fixed, presenting an outer diameter equal to the nominal and final inner diameter (DM) of the definitive bell mouth (21), said second portion (12) being able to be introduced inside the pre-formed bell mouth (21'), after the complete intervention of said first portion (11) which, in retracted position, allows the free subsequent introduction of said second portion (12) inside the pre-formed bell mouth (21'), said second portion being able exactly to calibrate the inner diameter of the bell mouth (21), subject to spontaneous retraction after the previous dilation; said first and second portions (11) and (12) being in mutual combination to form a single composite mandrel (1), set on a single axis coaxial to the pipe (20) to be treated, wherein the second portion (12) is positioned consecutively to the first.

2. Tool according to claim 1, **characterised in that** the first portion (11) is of the type with radially movable mechanical sectors (6), whose length, measured along the longitudinal axis (5) of the mandrel (1), is equal to the length of the bell mouth (21,21') and **in that** said first portion (11) is interposed between the second portion (12) and an end head (7), which also presents a smaller diameter than the inner diameter (D) of the pipe (20), so that the mechanical sectors (6) are bilaterally guided along planes perpendicular to the longitudinal axis (5) of the mandrel (1).

3. Tool according to claim 1 or 2, **characterised in that** it comprises, inside the first portion (11), means (8) for heating the first portion (11) to a temperature higher than or equal to that of the terminal section (2), so that the latter does not give off heat during its plastic dilation to form the pre-formed bell mouth (21') and means (9,99) for cooling the portion (12), both internally and externally, the external cooling means (99) operating on the definitive bell mouth (21) immediately after it has spontaneously retracted onto the second portion (12) which calibrates it internally, in such a way as to bring the definitive bell mouth (21) to ambient temperature quickly, once it has spontaneously retracted to the nominal definitive diameter (DN).

4. Tool according to any one of the previous claims, **characterised in that** the diameter (DN) of the second portion (12) is computed according to the thermoplastic material.

5. Tool according to any one of the previous claims, **characterised in that** means (3) for imparting relative motion between mandrel (1) and pipe (20) are provided, said means (3) operating in combination and synchrony with means (4) for driving the expansion and retraction of the first portion (11).

6. Tool according to claim 5, **characterised in that** the second portion (12) realises a stop on the front end (22) of the terminal section (2), during the preliminary introduction of the first portion (11) inside the terminal section (2).

7. Tool according to claim 5 or 6, **characterised in that** at least the second portion (12) is removably interchangeable.

## Patentansprüche

1. Werkzeug mit mehreren Betriebsstufen zum Formen von stabilen Muffen an den Endstücken von thermoplastischen Kunststoffrohren, vom Typ, der im Inneren des vorher bis auf einen plastischen Zustand aufgeheizten Endstückes (2) arbeitet, enthaltend einen ersten Abschnitt (11), der aus einer ersten, zurückgezogenen Endposition, in welcher er einen Durchmesser (D11) aufweist, der kleiner ist als der Innendurchmesser (D) des Rohres (20), so dass er frei und vorbereitend in das Innere des Endstückes (2) des Rohres (20) eingeführt werden kann, in eine zweite, aufgeweitete Endposition verschoben werden kann, in welcher er den gesamten Teil des Endstückes (2) aufweitet, welcher ihn umgibt und dabei eine Muffe (21') formt, **dadurch gekennzeichnet, dass**
- der provisorische Innendurchmesser (D12) der Muffe (21'), welcher dem Aussendurchmesser des ersten Abschnittes (11) in der Position der grössten Aufweitung entspricht, grösser ist als der endgültige nominale Innendurchmesser (DN) der fertigen Muffe (21), wobei der genannte erste Abschnitt (11) dann in die erste, zurückgezogene Endposition zurückkehrt;
- das Werkzeug ausserdem einen zweiten, geometrisch feststehenden Abschnitt (12) enthält, welcher einen Aussendurchmesser aufweist, der dem nominalen und endgültigen Innendurchmesser (DN) der fertigen Muffe (21) entspricht, wobei der genannte zweit Abschnitt (12) in das Innere der vorgeformten Muffe (21') eingeführt werden kann, und zwar nach dem komplett ausgeführten Zyklus des genannten ersten Abschnittes (11), welcher, nun in der zurückgezogenen Position, das anschliessende freie Einführen des genannten zweiten Abschnittes (12) in das Innere der vorgeformten Muffe (21') erlaubt, wobei der genannte zweite Abschnitt in der Lage ist, den Innendurchmesser der Muffe (21) genau zu kalibrieren, welche nach dem vorherigen Aufweiten einem spontanen Zusammenziehen unterliegt;
- wobei die genannten ersten und zweiten Abschnitte (11) und (12) aus einer wechselseitigen Kombination bestehen, um einen einzigen zusammengesetzten Dorn (1) zu bilden, der auf eine einzige Achse koaxial zu dem zu bearbeitenden Rohr (20) aufgezogen ist, und wobei der zweite Abschnitt (12) im Anschluss an den ersten angeordnet ist.

2. Werkzeug nach Patentanspruch 1, **dadurch gekennzeichnet, dass** der erste Abschnitt (11) von Typ mit radial beweglichen mechanischen Segmenten (6) ist, deren Länge, gemessen entlang der Längsachse (5) des Dorns (1), gleich der Länge der Muffe (21, 21') ist, und dadurch, dass der genannte erste Abschnitt (11) zwischen dem zweiten Abschnitt (12) und einem Endkopf (7) eingesetzt ist, welcher ebenfalls einen kleineren Durchmesser aufweist als der Innendurchmesser (D) des Rohres (20), so dass die mechanischen Segmente (6) beiderseitig entlang von Ebenen geführt werden, die lotrecht zu der Längsachse (5) des Dorns (1) verlaufen.

3. Werkzeug nach Patentanspruch 1 oder 2, **dadurch gekennzeichnet, dass** es im Inneren des ersten Abschnittes (11) Mittel (8) zum Aufheizen des ersten Abschnittes (11) enthält, und zwar bis auf eine Temperatur, die höher als oder gleich wie die des Endstückes (2) ist, so dass letzteres während seiner plastischen Aufweitung zum Bilden der vorgeformten Muffe (21') keine Wärme abgibt, sowie Mittel (9, 99) zum Kühlen des Abschnittes (12), innen wie auch aussen, wobei die äusseren Kühlmittel (99) auf die fertige Muffe (21) wirken, sobald diese sich spontan an dem zweiten Abschnitt (12) zusammengezogen hat, welcher sie von innen kalibriert, und zwar auf solche Weise, dass die fertige Muffe (21) schnell auf Raumtemperatur gebracht wird, sobald sich diese spontan bis auf den endgültigen Nenndurchmesser (DN) zusammengezogen hat.

4. Werkzeug nach einem beliebigen der vorstehenden Patentansprüche, **dadurch gekennzeichnet, dass** der Durchmesser (DN) des zweiten Abschnittes (12) je nach dem Kunststoffmaterial kalkuliert ist.

5. Werkzeug nach einem beliebigen der vorstehenden Patentansprüche, **dadurch gekennzeichnet, dass** Mittel (3) zum Verleihen der entsprechenden Bewegung zwischen Dorn (1) und Rohr (20) vorgesehen sind, wobei die genannten Mittel (3) in Kombination und synchron mit Mitteln (4) zum Auslösen der Aufweitung und des Zusammenziehens des ersten Abschnittes (11) arbeiten.

6. Werkzeug nach Patentanspruch 5, **dadurch gekennzeichnet, dass** der zweite Abschnitt (12) einen Anschlag an dem vorderen Ende (22) des Endstückes (2) bildet, während das vorbereitende Einführen des ersten Abschnittes (11) in das Innere des Endstückes (2) erfolgt.

7. Werkzeug nach Patentanspruch 5 oder 6, **dadurch gekennzeichnet, dass** wenigstens der zweite Abschnitt lösbar ist und ausgetauscht werden kann.

## Revendications

1. Outillage avec de multiples phases opératives, pour former des tulipes stables sur la section terminale de jonction de tubes en matériau thermoplastique, du type opérant à l'intérieur de la section terminale de jonction (2) auparavant chauffée à l'état plastique et comprenant une première portion (11), mobile d'une première position extrême rétractée, dans laquelle elle présente un diamètre (D11) inférieur au diamètre interne (D) du tube (20), pouvant ainsi être introduite librement et préliminairement dans la section terminale (2) du tube (20), à une seconde position extrême expansée qui dilate toute la partie de la section terminale (2) qui l'entoure, en formant ainsi une tulipe, **caractérisé en ce que**:
- le diamètre interne provisoire (D12) de la tulipe (21'), correspondant au diamètre externe de la première portion (11) en position d'expansion extrême, est supérieur au diamètre nominal interne final (DN) de la tulipe définitive (21), ladite première portion (11) retournant ensuite à sa première position extrême rétractée;
- l'outillage comprend de plus une seconde portion (12), géométriquement fixe, présentant un diamètre externe égal au diamètre interne nominal et final (DN) de la tulipe définitive (21), ladite seconde portion (12) pouvant être introduite dans la tulipe préformée (21'), après la complète intervention de ladite première portion (11) qui, dans la position rétractée, permet l'introduction libre successive de ladite seconde portion (12) dans la tulipe préformée (21'), ladite seconde portion pouvant calibrer exactement le diamètre interne de la tulipe (21), cette dernière étant sujette à une rétraction après la précédente dilatation;
lesdites première et seconde portion (11) et (12) étant mutuellement en combinaison pour former un seul mandrin composé (1), placé sur un axe coaxial au tube devant être traîté, dans lequel la seconde portion (12) est positionnée consécutivement à la première.

2. Un outillage selon la revendication 1, **caractérisé en ce que** la première portion (11) est de type comprenant des secteurs mécaniques mobiles radialement (6), dont la longueur, mesurée le long de l'axe longitudinal (5) du mandrin (1), est égale à la longueur de la tulipe (21, 21'), et **en ce que** ladite première portion (11) est interposée entre la seconde portion (12) et une tête d'extrémité (7), qui présente également un diamètre inférieur au diamètre interne (D) du tube (20), de manière à ce que les secteurs mécaniques (6) soient guidés bilatéralement le long de plans perpendiculaires à l'axe longitudinal (5) du mandrin (1).

3. Un outillage selon la revendication 1 ou 2, **caractérisé en ce qu'**il comprend, à l'intérieur de la première portion (11), des moyens (8) pour chauffer la première portion (11) à une température supérieure ou égale à celle de la section terminale (2), de manière à ce que cette dernière ne cède pas de chaleur pendant sa dilatation plastique pour former la tulipe préformée (21'), et des moyens (9, 99) pour refroidir la portion (12), aussi bien intérieurement qu'extérieurement, les moyens de refroidissement externe (99) opérant sur la tulipe définitive (21) immédiatement après que cette dernière ait effectué spontanément sa rétraction sur la seconde portion (12) qui la calibre intérieurement, de manière à porter rapidement la tulipe définitive (21) à température ambiente lorsqu'elle s'est spontanément rétractée à son diamètre nominal définitif (DN).

4. Un outillage selon n'importe laquelle des revendications précédentes, **caractérisé en ce que** le diamètre (DN) de la seconde portion (12) est calculé sur la base du matériau thermoplastique.

5. Un outillage selon n'importe laquelle des revendications précédentes, **caractérisé en ce que** sont prévus des moyens (3) pour imprimer un mouvement relatif entre le mandrin (1) et le tube (20), lesdits moyens (3) opérant en combinaison et synchronicité avec des moyens (4) pour commander l'expansion et la rétraction de la première portion (11).

6. Un outillage selon la revendication 5, **caractérisé en ce que** la seconde portion (12) forme une butée d'arrêt sur l'extrémité frontale (22) de la section terminale (2), pendant l'introduction préliminaire de la première portion (11) dans la section terminale (2).

7. Un outillage selon la revendication 5 ou 6, **caractérisé en ce qu'**au moins la seconde portion (12) est interchangeable amoviblement.
